# DEMANDE DE BREVET EUROPEEN

(11) **EP 2 353 540 A1**
(43) Date de publication de la demande: **10.08.2011**
(21) Numéro de dépôt: 10290044.6
(22) Date de dépôt: 28.01.2010
(51) Int. Cl.: A61C 3/02, A61C 8/00

(54) **Ensemble d'un implant dentaire et d'un élément prothétique**

(71) Demandeur: SUDIMPLANT, 31500 Toulouse (FR)
(72) Inventeur: Benhamou, Olivier, 1060 Bruxelles (BE)
(74) Mandataire: Quintelier, Claude

(57) **Abrégé**

Ensemble d'un implant dentaire (1) et d'un élément prothétique (10), lequel implant dentaire (1) comporte un corps agencé pour être implanté dans l'os des maxillaires, lequel élément prothétique (10) comporte une partie intra-implantaire et une partie extra-implantaire (13), lequel corps comprend une cavité interne (7) destinée à recevoir la partie intra-implantaire de l'élément prothétique, ledit élément prothétique étant formé par un élément monobloc dont la partie intra-implantaire est formée par un tenon, agencé pour être scellé ou collé dans la cavité, et dont la partie extra-implantaire (13) est configurée sous forme d'un organe d'attachement agencé pour y appliquer directement une prothèse dentaire.

## Description

La présente invention concerne un ensemble d'un implant dentaire et d'un élément prothétique, lequel implant dentaire comporte un corps agencé pour être implanté dans l'os des maxillaires, lequel élément prothétique comporte une partie intra-implantaire et une partie extra-implantaire, lequel corps comprend une cavité interne destinée à recevoir la partie intra-implantaire de l'élément prothétique.

Un tel ensemble est connu du brevet EP 0 278 887. Suivant l'ensemble connu, l'implant comporte un corps ayant une cavité dans laquelle vient se visser un élément prothétique formé d'une partie tronconique ou faux-moignon ou système d'attachement, traversée par une vis. Par la suite, une couronne dentaire sera scellée sur ce faux-moignon ou une prothèse amovible viendra se clipser sur le système d'attachement.

Un implant dentaire est une racine artificielle qui a pour rôle de remplacer une racine de dent naturelle. Sa mise en place chirurgicale consiste à réaliser, par forage dans l'os des maxillaires, une alvéole dans laquelle sera vissé ou impacté l'implant. Après un temps de cicatrisation de plusieurs semaines, cet implant pourra être mis en fonction par la mise en place d'un composant prothétique qui supportera une couronne.

Il existe deux approches chirurgicales : une technique dite en deux temps opératoires, où l'implant est enfoui dans l'os et recouvert par la gencive pendant le temps de la cicatrisation osseuse. Cette cicatrisation osseuse terminée, lors d'un second temps opératoire, on incisera la gencive au-dessus de l'implant pour mettre à nu l'implant, et y fixer une vis de cicatrisation à trajet transgingival, permettant ainsi la cicatrisation de la gencive. Dans ce cas, la gencive va cicatriser autour de cette vis de cicatrisation et non autour de l'implant. Après cicatrisation gingivale, cette vis est déposée et remplacée par un élément prothétique sur lequel se fixera la couronne. On parle dans ce cas de cicatrisation de 2^{ème} intention au niveau gingival.

La technique en un temps opératoire consiste à poser un implant de conception différente, car ce dernier aura à la fois une partie endo-osseuse et une partie transgingivale. Dans cette configuration, on obtiendra une cicatrisation de la gencive de première intention autour de la partie transgingivale de l'implant. La sertissure, dite attache épithéliale, est acquise définitivement dans cette technique. Cette technique, où l'implant est d'emblée en relation avec la cavité buccale, n'implique donc pas un second temps opératoire.

Un inconvénient de l'ensemble connu est que les deux techniques d'implantation sont complexes. En particulier la phase prothétique nécessite l'intervention d'un practicien spécialisé. En effet un practicien non formé à la prothèse implantaire ne peut utiliser les composants prothétiques connus sans formation particulière. En odontologie conventionnelle un chirurgien dentiste peut, à partir d'une racine dentaire dont la couronne est détruite, préparer un logement dans lequel viendra se fixer par scellement un tenon supportant la reconstruction prothétique.

L'invention a pour but de simplifier la pose d'implant dentaire et d'offrir un ensemble d'un implant dentaire et d'un élément prothétique où l'élément prothétique peut être posé par un chirurgien dentiste sans que ce dernier soit un spécialiste en la matière.

A cette fin, un ensemble suivant l'invention est caractérisé en ce que ledit élément prothétique est un élément monobloc dont la partie intra-implantaire est formée par un tenon, agencé pour être scellé ou collé dans la cavité, et dont la partie extra-implantaire est configurée sous forme d'un organe d'attachement agencé pour y appliquer directement une prothèse dentaire. Par l'usage d'un élément prothétique monobloc suivant l'invention, le principe susdit utilisé en odontologie conventionnelle a été transposé à l'implantologie orale. En effet, l'élément monobloc peut, grâce à sa partie intra-implantaire, être facilement introduit dans la cavité de l'implant dentaire, de la même façon qu'en odontologie conventionnelle. De plus, puisque la partie extra-implantaire est configurée sous forme d'un organe d'attachement, le chirurgien dentiste peut sans formation supplémentaire y appliquer la prothèse dentaire, par exemple sous forme d'une couronne.

Une première forme de réalisation préférentielle d'un ensemble suivant l'invention est caractérisée en ce que ladite cavité comporte une section d'entrée configurée en polygone, et en ce que ledit élément prothétique comporte à hauteur de la jonction entre les parties intra- et extra-implantaires une partie de jonction configurée en polygone de telle façon que la partie de jonction peut s'emboîter dans la section d'entrée. La configuration en polygone de la section d'entrée et d'un segment de l'élément prothétique empêche cette dernière de tourner lorsqu'elle sera introduite dans la cavité. En effet, puisque la partie de jonction de l'élément prothétique épouse la configuration en polygone de la section d'entrée, l'emboîtement de cette partie de jonction dans la section d'entrée va avoir comme conséquence que leurs positions sont fixées empêchant ainsi la rotation de l'élément prothétique dans la cavité.

Une deuxième forme de réalisation préférentielle d'un ensemble suivant l'invention est caractérisée en ce que ladite cavité comporte un taraudage interne qui s'étend sur au moins une partie de la profondeur de la cavité. Ce taraudage permet d'y visser une vis de cicatrisation ou de couverture.

Une troisième forme de réalisation préférentielle d'un ensemble suivant l'invention est caractérisée en ce que ladite cavité comporte une gorge de rétention appliquée dans sa paroi interne et agencée pour recevoir un élément ancillaire formant partie d'un mandrin agencé pour retenir ledit implant. Ceci facilite considérablement la pose de l'implant.

Une quatrième forme de réalisation préférentielle d'un ensemble suivant l'invention est caractérisée en ce que ladite partie intra-implantaire possède une paroi essentiellement lisse et pourvue d'au moins une rainure d'évacuation, ladite partie intra-implantaire étant agencée pour être collée ou scellée dans ladite cavité. La paroi essentiellement lisse permet l'usage d'une technique de collage ou de scellement pour fixer l'élément prothétique dans la cavité, alors que la rainure d'évacuation permet le dégagement de ciment ou de colle excédentaire et d'air lors du scellement ou du collage.

Une cinquième forme de réalisation préférentielle d'un ensemble suivant l'invention est caractérisée en ce que la partie extra-implantaire possède une géométrie tronconique. Ceci permet la pose de la prothèse dentaire.

Une sixième forme de réalisation préférentielle d'un ensemble suivant l'invention est caractérisée en ce que la partie extra-implantaire est pourvue d'un élément d'attachement. Ceci permet une stabilisation d'un appareil amovible.

Une septième forme de réalisation préférentielle d'un ensemble suivant l'invention est caractérisée en ce que ledit implant est fabriqué soit en métal, soit en céramique, soit en un matériau composite, soit en peek, ou en une combinaison de ces matériaux, ledit élément prothétique est fabriqué soit en métal, soit en céramique, soit en peek, soit en un matériau calcinable, soit en un matériau composite ou en une combinaison de ces matériaux. En particulier l'usage d'un matériau calcinable permet une large flexibilité de réalisation.

Une huitième forme de réalisation préférentielle d'un ensemble suivant l'invention est caractérisée en ce que ledit foret comporte une première et une deuxième lame disposées sensiblement perpendiculairement l'une à l'autre, une extrémité de la deuxième lame étant décalée par rapport à une extrémité de la première lame. Ceci permet un meilleur forage dans l'os des maxillaires.

Une neuvième forme de réalisation préférentielle d'un ensemble suivant l'invention est caractérisée en ce que une extrémité du mandrin est configurée en polygone et agencée pour être introduite dans la section d'entrée de la cavité. Ainsi, cette extrémité du mandrin épouse parfaitement la forme de la section d'entrée de la cavité ce qui facilite la pose de l'implant dentaire.

L'invention sera maintenant décrite plus en détail à l'aide des dessins qui illustrent des formes de réalisation préférentielles d'un ensemble suivant l'invention. Dans les dessins :
la figure 1 montre une vue extérieur d'un implant dentaire faisant partie d'un ensemble suivant l'invention,
la figure 2 montre une vue en coupe dans le sens longitudinal de l'implant dentaire illustré à la figure 1;
les figures 3 a et b illustrent un moignon faisant partie d'un ensemble suivant l'invention;
la figure 4 illustre un mandrin faisant partie de l'ensemble;
la figure 5 illustre une vis de couverture faisant partie de l'ensemble;
la figure 6 illustre une vis de cicatrisation faisant partie de l'ensemble;
la figure 7 illustre un foret faisant partie de l'ensemble; et
la figure 8 illustre un élément d'attachement faisant partie de l'ensemble.

Dans les dessins une même référence a été attribuée à un même élément ou à un élément analogue.

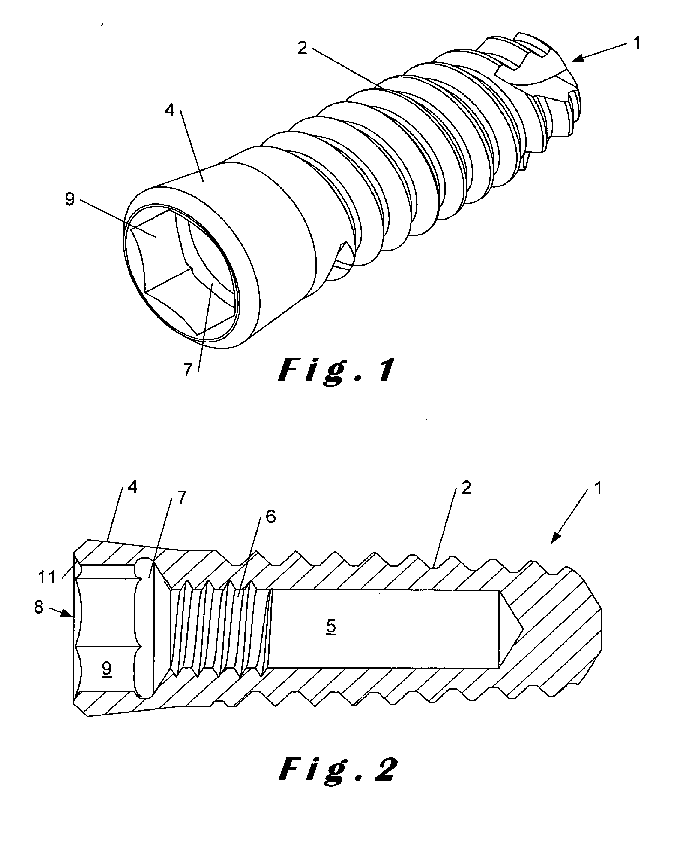

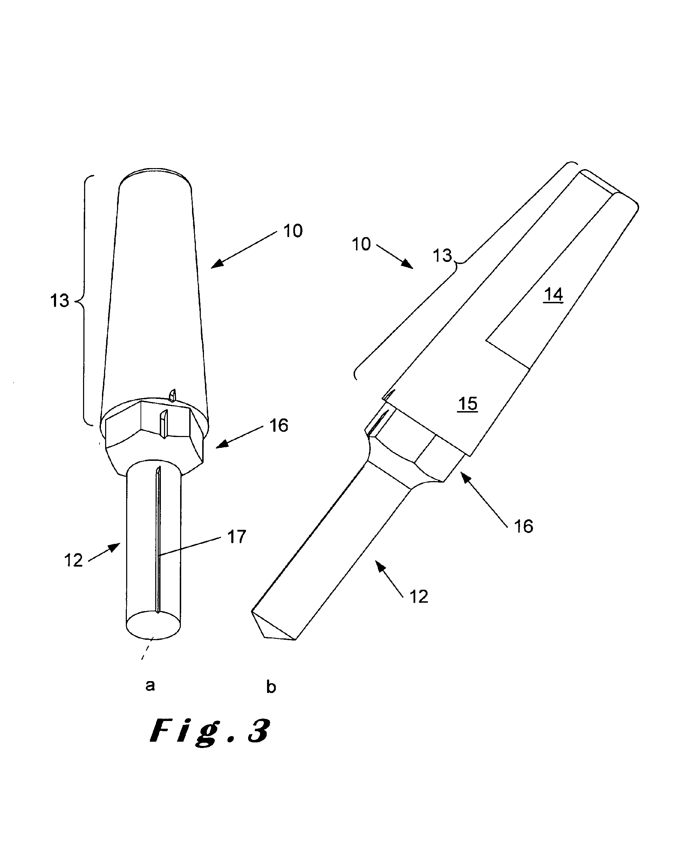

L'ensemble suivant l'invention comporte un implant dentaire 1 (voir figure 1) et un élément prothétique 10 (voir figure 3). L'implant dentaire 1 illustré à la figure 1 comporte un corps agencé pour être implanté et ayant une forme cylindro-conique avec de préférence une conicité sur 4 mm à l'apex dont 2,35 mm de base (3) cruciforme, avec une partie évasée (4) d'une hauteur de 2 mm. Le diamètre au col peut aller de 2,5 à 7 mm, mais plus particulièrement entre 2, 9 et 5,7 mm. La longueur de l'implant dentaire se décline de 5 à 17 mm, en particulier de 6 à 15,5 mm. Mise à part la forme cylindro-conique, une forme cylindrique peut également être envisagée. L'implant dentaire illustré à la figure 1 peut être utilisé tant pour une technique dite en deux temps opératoire que pour une technique dite en un temps opératoire. A cette fin, la partie évasée 4 ne sera pas enfouie dans l'os, mais plutôt dans la gencive après la pose de l'implant dentaire lors de l'utilisation de la technique dite en un temps, alors que cette même partie évasée sera enfuie dans l'os lors de l'utilisation de la technique dite en deux temps. La paroi externe de l'implant dentaire comporte un taraudage 2 permettant de visser l'implant dentaire dans l'os des maxillaires.

L'implant dentaire 1 est par exemple fabriqué en métal, comme du titane, du zircone, ou un hybride zircone-titane. Il peut également être fabriqué en peek, en céramique ou en un matériau composite, ou en une combinaison de ces matériaux.

La figure 2 illustre une vue en coupe dans le sens longitudinal d'un implant dentaire suivant l'invention. Le corps de l'implant dentaire comprend une cavité interne 5, ayant une section d'entrée 8, située dans le col 4 de l'implant. Cette section d'entrée 8 est configurée en polygone 9, en particulier en six pans. Il va de soi que d'autres configurations de polygone qu'un six pans peuvent être envisagées. Le six pan a néanmoins l'avantage qu'il permet l'usage d'outils classiques tels qu'un mandrin ou une clef Allen. De préférence, cette configuration en polygone à la même dimension, quelle que soit la taille de l'implant dentaire, permettant ainsi d'utiliser un même instrument pour la pose de l'implant dentaire.

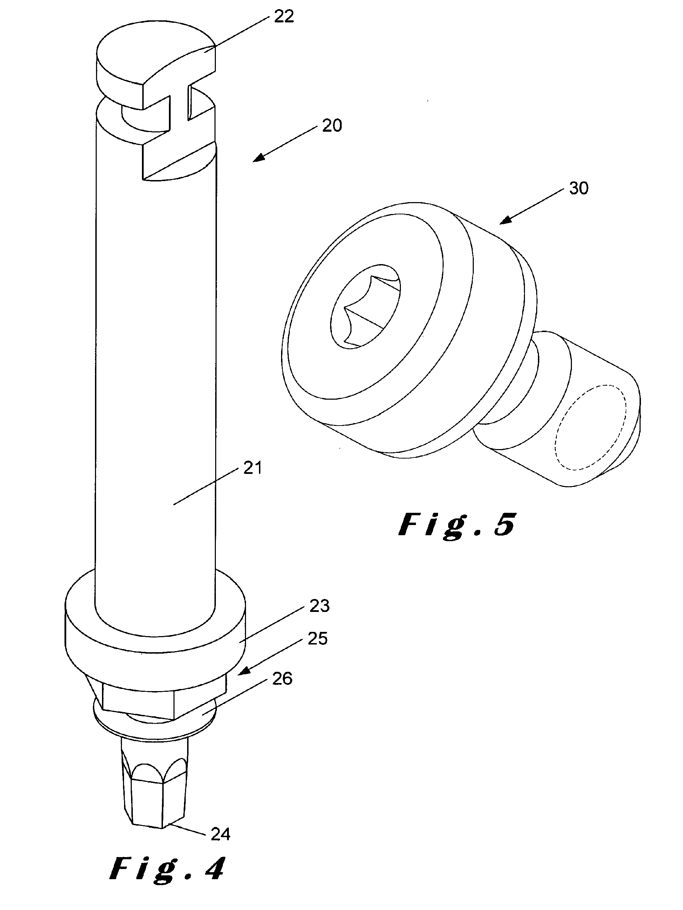

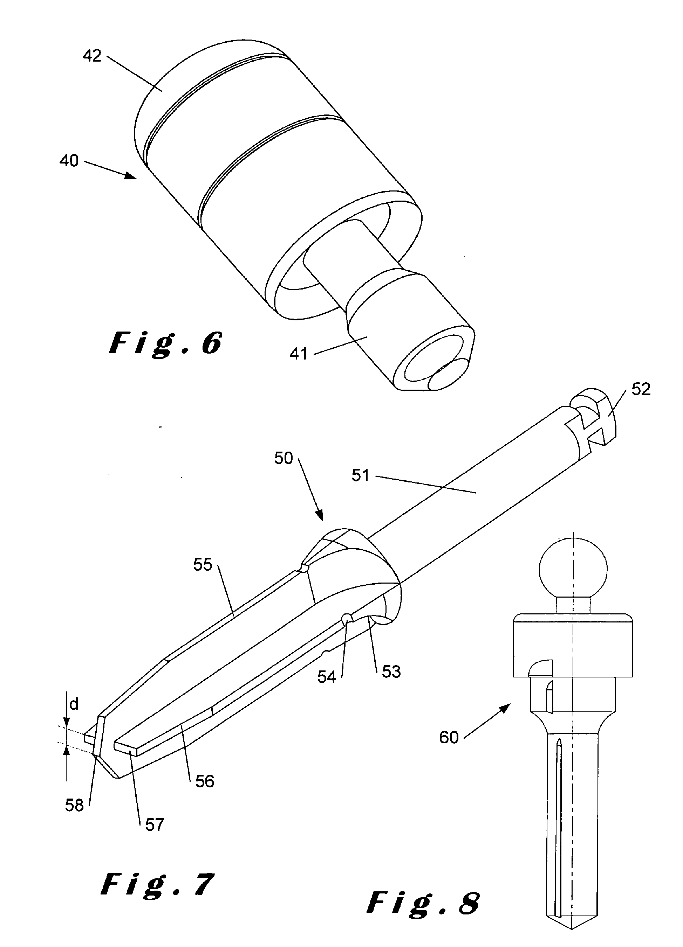

Juste en dessous de cette configuration en polygone 9 se trouve une gorge de rétention 7 appliquée dans la paroi interne de la cavité et agencée pour recevoir une partie d'un mandrin retenant l'implant, comme il sera décrit en détail ci-dessous. Cette gorge de rétention a de préférence une hauteur de 0,5 mm et est placée entre la section d'entrée et un taraudage interne 6, qui s'étend à l'intérieur de la cavité 5 sur au moins une partie de la profondeur de la cavité. Le taraudage interne 6 sert à recevoir le pas de vis d'une vis de couverture, comme illustré à la figure 5, ou une vis de cicatrisation, comme illustré à la figure 6. Si le taraudage interne sert uniquement à recevoir une vis de couverture ou de cicatrisation, il s'étend sur une longueur d'environ 3 mm et possède par exemple un filet M2 ou M2,5. Par contre, le taraudage interne pourrait également être utilisé pour y visser l'élément prothétique, dans lequel cas le taraudage interne s'étendra sur une distance située entre 0,2 à 15 mm.

La cavité interne 5 s'étend sur une distance située entre 3 et 15 mm, plus particulièrement entre 7 et 11 mm et possède un diamètre situé entre 1 et 4 mm. De préférence, le col de l'implant 4 a un état de surface lisse, du fait de la possibilité de l'enfouir ou non dans l'os, évitant ainsi une rétention de plaque bactérienne. Par contre, la partie pourvue du taraudage externe 2 aura de préférence un état de surface rugueux pour améliorer l'intégration de l'implant dans l'os. De préférence, la partie évasée 4 du col de l'implant comporte un biseau 11 qui est configuré de telle façon à rejoindre l'élément prothétique lorsque monté dans l'implant dentaire. Ceci permet une bonne assise à la future prothèse.

Les figures 3 a et b illustrent une forme de réalisation préférentielle d'un élément prothétique faisant partie d'un ensemble suivant l'invention. L'élément prothétique 10 monobloc est par exemple formé par un faux-moignon dans sa partie extra-implantaire 13 et par un tenon cylindrique à rainure dans sa partie intra-implantaire 12. La partie intra-implantaire est agencée pour être introduite dans la cavité 5 de l'implant dentaire. La partie intra-implantaire est formée par un tenon agencé pour être scellée ou collée dans la cavité. Le tenon est de préférence de forme cylindrique, mais peut également avoir d'autres formes comme rectangulaire, hexagonale, conique ou cylindro-conique. Le cas échéant, l'élément prothétique peut, dans sa partie intra-implantaire, être pourvu d'un pas de vis compatible avec le taraudage interne présent dans la cavité 5.

L'élément prothétique monobloc est configuré dans sa partie extra-implantaire sous la forme d'un faux moignon 14-15 agencé pour y recevoir directement une prothèse dentaire. Ce faux moignon est par exemple formé par un méplat 14 appliqué sur le moignon. Ce méplat fait partie d'une géométrie tronconique de la partie extra-implantaire et ne s'étend que sur une partie d'à peu près deux tiers de la hauteur de cette partie extra-implantaire. Ce méplat assure un blocage anti-rotationel de la prothèse.

L'élément prothétique monobloc comporte à hauteur de la jonction entre les parties intra- et extra-implantaires de préférence une partie de jonction 16 configurée en polygone, de telle façon que la partie de jonction peut s'emboîter dans la section d'entrée 8 de la cavité, également configurée en polygone 9. Ainsi, lorsque les deux configurations en polygone sont emboîtées l'une dans l'autre lorsque l'élément prothétique est posé dans l'implant dentaire, une rotation de cet élément prothétique dans la cavité sera empêchée grâce à la prise du polygone du moignon dans le polygone de la section d'entrée de l'implant.

De préférence, la partie intra-implantaire de l'élément prothétique possède une paroi essentiellement lisse et pourvue d'une rainure d'évacuation 17 qui s'étend sur toute la longueur de cette partie intra-implantaire. La rainure 17 se prolonge de préférence sur la partie de jonction 16 et sur une distance inférieure à 1 cm sur la partie extra-implantaire. La fonction de cette rainure d'évacuation sera décrite ci-dessous.

L'élément prothétique est de préférence fabriqué en métal comme par exemple du titane. Il peut également être fabriqué en céramique, en peek ou en un matériau calcinable ou en une combinaison de ces matériaux. De préférence, le moignon a une base de 2,5 à 8 mm avec une hauteur située entre 5 et 15 mm pour la partie extra-implantaire et entre 3 et 15 mm pour la partie intra-implantaire.

L'élément prothétique monobloc est scellé ou collée dans la cavité. A cette fin, on utilise une colle ou un ciment dentaire qui sera appliquée sur la partie intra-implantaire avant d'introduire l'élément prothétique dans la cavité de l'implant dentaire. Cet élément prothétique est glissé dans la cavité et l'excédent de ciment ou de colle ainsi que l'air présent dans la cavité peuvent être dégagés grâce à la présence des rainures d'évacuation 17. Après avoir scellé ou collé cet élément prothétique monobloc, la prothèse dentaire peut être fixée à sa partie extra-implantaire.

La figure 4 illustre un mandrin 20 faisant partie d'un ensemble suivant l'invention. Le mandrin permet la préhension et la pose de l'implant dentaire 1. Le mandrin 20 comporte un organe de couplage 22 servant à y coupler un contre-angle ou une pièce à main pour manipuler le mandrin. Ce dernier comporte également une tige 21 qui se prolonge d'abord dans une partie plus épaisse 23 et puis en une tête de prise 25 qui est configurée en polygone. Cette configuration en polygone rejoint celle (9) qui se trouve dans la section d'entrée 8 de l'implant dentaire 1, de telle façon que la tête 25 puisse prendre prise dans la configuration en polygone de l'implant dentaire permettant ainsi d'entrainer l'implant dentaire pour le visser dans l'os des maxillaires à l'aide du mandrin.

Le mandrin 20 comporte également un petit disque 26 décalé par rapport à la partie 25 configurée en polygone. Le petit disque est dimensionné de telle façon à pouvoir venir se loger dans la gorge de rétention 7 de l'implant dentaire. Ceci permet de fixer temporairement l'implant dentaire au mandrin lors de l'introduction de l'implant dentaire dans la bouche d'un patient à l'aide du mandrin. Le petit disque est de préférence fabriqué en une matière semi-rigide comme du silicone, du caoutchouc ou du peek, donnant ainsi une flexibilité au petit disque, ce qui permet de non seulement facilement l'introduire dans la gorge de rétention, mais également de le ressortir après la pose de l'implant dentaire.

De préférence, le mandrin 20 comporte également à son extrémité un élément de prise 24, agencé pour prendre prise dans une vis de couverture ou une vis de cicatrisation comme illustré aux figures 5 ou 6. L'élément de prise est à cette fin configuré par exemple comme un polygone à six pans ou comme un tournevis plat ou en croix en fonction de ce qui est utilisé pour les vis de couverture ou de cicatrisation. Ainsi, le chirurgien dentiste peut utiliser un même mandrin pour la préhension de l'implant dentaire, son implantation dans l'os des maxillaires, et sa capacité à visser la vis de couverture ou de cicatrisation, ce qui évite de devoir chaque fois prendre un autre instrument.

De préférence, l'ensemble suivant l'invention comporte également la vis de couverture 30 reprise à la figure 5 et/ou la vis de cicatrisation 40 reprise à la figure 6. Ces vis sont pourvues d'un pas de vis, agencé pour être vissé dans le taraudage. La forme de la vis de couverture ou de cicatrisation permet de recouvrir le col de l'implant et son biseau.

La figure 7 illustre un exemple d'un foret 50 faisant, de préférence, partie d'un ensemble suivant l'invention. Tout comme le mandrin 20, le foret comporte un organe de couplage 52 et une tige 51. Le foret possède un profil épousant celui de l'implant dentaire, ce qui permet de forer dans l'os des maxillaires à la dimension correspondant à celle de l'implant dentaire. Ceci permet d'utiliser un même foret pour la technique dite en un temps et celle dite en deux temps. L'alésoir permet de forer plus profondément, permettant ainsi d'enfoncer la partie évasée 4 de l'implant dentaire dans l'os des maxillaires.

Comme illustré à la figure 7, le foret comporte une première 55 et une deuxième 56 lame disposées sensiblement perpendiculairement l'une à l'autre. Une extrémité 57 de la deuxième lame étant décalée par rapport à une extrémité 58 de la première lame. Ce décalage procure un meilleur effet coupant lors du forage dans l'os des maxillaires, car la première lame 55 sert de lame d'attaque alors que la deuxième lame 56 sert plus pour l'alésage du trou à forer. De préférence, le foret possède une forme cylindro-conique épousant ainsi celle de l'implant dentaire à placer. Le foret comporte de préférence un alésoir 53 disposé au-dessus des lames.

Le foret possède un diamètre de préférence situé entre 2 et 7 mm, plus particulièrement entre 2.7 et 6 mm. Il est fabriqué en acier inoxydable, en titane ou en céramique. Le foret comporte de préférence un repère 54 situé entre l'alésoir 53 et les lames 55 et 56, permettant ainsi à l'utilisateur d'identifier sa limite de forage en fonction du choix de sa technique implantaire, en 1 ou 2 temps opératoires.

La figure 8 illustre un attachement sphérique 60 dont la forme de l'épaulement permet de recouvrir le col de l'implant. Ainsi, cet attachement sphérique pourra non seulement être scellé ou collé dans l'implant dentaire, mais pourra également être utilisé comme élément de stabilisation d'une prothèse amovible.

## Revendications

1. Ensemble d'un implant dentaire et d'un élément prothétique, lequel implant dentaire comporte un corps agencé pour être implanté dans l'os des maxillaires, lequel élément prothétique comporte une partie intra-implantaire et une partie extra-implantaire, lequel corps comprend une cavité interne destinée à recevoir la partie intra-implantaire de l'élément prothétique, **caractérisé en ce que** ledit élément prothétique est un élément monobloc dont la partie intra-implantaire est formée par un tenon, agencé pour être scellé ou collée dans la cavité, et dont la partie extra-implantaire est configurée sous forme d'un organe d'attachement agencé pour y appliquer directement une prothèse dentaire.

2. Ensemble suivant la revendication 1, **caractérisé en ce que** ladite cavité comporte une section d'entrée configurée en polygone, et **en ce que** ledit élément prothétique comporte à hauteur de la jonction entre les parties intra- et extra-implantaires une partie de jonction configurée en polygone de telle façon que la partie de jonction peut s'emboîter dans la section d'entrée.

3. Ensemble suivant la revendication 1 ou 2, **caractérisé en ce que** ladite cavité comporte un taraudage interne qui s'étend sur au moins une partie de la profondeur de la cavité.

4. Ensemble suivant l'une des revendications 1 à 3, **caractérisé en ce que** ladite cavité comporte une gorge de rétention appliquée dans sa paroi interne et agencée pour recevoir un élément ancillaire formant partie d'un mandrin agencé pour retenir l'implant.

5. Ensemble suivant la revendication 4, **caractérisé en ce que** ladite gorge de rétention est placée entre la section d'entrée et le taraudage interne.

6. Ensemble suivant l'une des revendications 1 à 5, **caractérisé en ce que** ladite partie intra-implantaire possède une paroi essentiellement lisse et pourvue d'au moins une rainure d'évacuation, ladite partie intra-implantaire étant agencée pour être collée ou scellée dans ladite cavité.

7. Ensemble suivant la revendication 2 et 6, **caractérisé en ce que** la ou les rainure(s) se prolonge(nt) sur ladite partie de jonction.

8. Ensemble suivant la revendication 7, **caractérisé en ce que** la ou les rainure(s) se prolonge(nt) sur une distance inférieure à 1 cm sur la partie extra-implantaire, en particulier sur une distance située entre 2 et 3 mm.

9. Ensemble suivant l'une des revendications 1 à 8, **caractérisé en ce que** ledit implant possède une géométrie essentiellement cylindro-conique, ladite cavité s'étend de façon coaxiale à un axe central de l'implant.

10. Ensemble suivant l'une des revendications 1 à 9, **caractérisé en ce que** la partie extra-implantaire possède une géométrie tronconique.

11. Ensemble suivant la revendication 10 **caractérisé en ce que** la partie extra-implantaire est chanfreinée sur une partie se sa longueur.

12. Ensemble suivant l'une des revendications 1 à 3, **caractérisé en ce que** la partie extra-implantaire est pourvue d'un attachement sphérique.

13. Ensemble suivant l'une des revendications 1 à 12, **caractérisé en ce que** ledit implant est fabriqué soit en métal, soit en céramique, soit en un matériau composite, soit en peek ou en une combinaison de ces matériaux, ledit élément prothétique est fabriqué soit en métal, soit en céramique, soit en peek, soit en un matériau calcinable, soit en un matériau composite ou en une combinaison de ces matériaux.

14. Ensemble suivant l'une des revendications 1 à 13, **caractérisé en ce qu'**il comporte également un foret ayant un profil épousant celui de l'implant.

15. Ensemble suivant la revendication 14, **caractérisé en ce que** ledit foret comporte une partie supérieure pourvue d'un alésoir.

16. Ensemble suivant la revendication 14 ou 15, **caractérisé en ce que** ledit foret comporte une première et une deuxième lame disposées sensiblement perpendiculairement l'une à l'autre, une extrémité de la deuxième lame étant décalée par rapport à une extrémité de la première lame.

17. Ensemble suivant l'une des revendications 2 ou 5, **caractérisé en ce qu'**il comporte également une vis de couverture ayant un pas de vis agencé pour être vissé dans le taraudage.

18. Ensemble suivant l'une des revendications 2 ou 5, **caractérisé en ce qu'**il comporte également une vis de cicatrisation ayant un pas de vis agencé pour être vissé dans le taraudage.

19. Ensemble suivant la revendication 2 et 18, **caractérisé en ce que** ladite tête du mandrin est configurée en polygone et agencée pour être introduite dans la section d'entrée de la cavité.

20. Ensemble suivant la revendication 4, **caractérisé en ce que** le mandrin comporte une tête de prise agencée pour s'insérer dans la gorge de rétention de l'implant dentaire.

21. Ensemble suivant la revendication 17, 18 et 19 ou 20, **caractérisé en ce que** ledit mandrin comporte une extrémité pourvue d'un élément de prise, agencé pour prendre prise dans ladite vis de couverture ou vis de cicatrisation.
